# EUROPÄISCHE PATENTSCHRIFT

(11) **EP 2 032 347 B1**
(45) Veröffentlichungstag und Bekanntmachung des Hinweises auf die Patenterteilung: **24.03.2010**
(21) Anmeldenummer: 07764806.1
(22) Anmeldetag: 23.06.2007
(51) Int. Cl.: B29D 11/00, B42D 15/00, B42D 15/10

(54) **MEHRSCHICHTKÖRPER MIT MIKROLINSEN**
MULTILAYER ELEMENT COMPRISING MICROLENSES
CORPS MULTICOUCHE COMPORTANT DES MICRO-LENTILLES

(30) Priorität: 26.06.2006 DE 102006029536
(43) Veröffentlichungstag der Anmeldung: 11.03.2009
(73) Patentinhaber: OVD Kinegram AG, 6301 Zug (CH)
(72) Erfinder: HANSEN, Achim, CH-6300 Zug (CH); TOMPKIN, Wayne, Robert, CH-5400 Baden (CH); SCHILLING, Andreas, CH-6332 Hagendorn (CH)
(74) Vertreter: Zinsinger, Norbert
(86) Internationale Anmeldenummer: PCT/EP2007/005552
(87) Internationale Veröffentlichungsnummer: WO 2008/000402

(56) Entgegenhaltungen:
- WO-A-01/39138
- WO-A-2005/052650
- WO-A-2005/106601

## Beschreibung

Die Erfindung betrifft einen Mehrschichtkörper mit Mikrolinsen und ein Herstellungsverfahren hierzu.

Mehrschichtkörper mit Mikrolinsen und unter den Mikrolinsen angeordneten identischen, repetitiven Mikrobildern werden als Sicherheitselemente für Sicherheitsdokumente, wie beispielsweise- Banknoten und ID-Cards eingesetzt.

So beschreibt beispietsweise-US 5,712,731 eine derartige Anordnung eines Mikrolinsenrasters und eines Mikrobildrasters, das von einer Vielzahl identischer, gemäß des Mikrobildrasters angeordneter Mikrobilder gebildet wird. Die in einem Mikrolinsenarray angeordneten Mikrolinsen erzeugen ein bildpunktweise vergrößertes Abbild der Mikrobilder, so dass für den Betrachter eine vergrößerte Darstellung des Mikrobildes sichtbar wird. Da sich der von den Mikrobildern jeweils dargestellte Bildpunkt des jeweiligen Mikrobildes in Abhängigkeit von dem vertikalen und horizontalen Betrachtungswinkel ändert, zeigt eine derartige Anordnung eines Mikrolinsenrasters und eines Mikrobildrasters mit identischen Mikrobildern einen optisch variablen Effekt, d.h. das für den Betrachter vergrößerte Mikrobild scheint sich beim Drehen und/ oder Kippen der Anordnung zu bewegen. Das erzeugte Bild kann vor oder hinter der Substratebene liegen.

Auch die WO 2005/052650 beschreibt eine derartige Anordnung eines Mikrolinsenrasters und eines Mikrobildrasters, durch welche ein solcher optisch variabler Effekt generiert wird. Hierbei wird vorgeschlagen, zur Erzeugung von Graustufen die die Mikrobilder ausbildenden Pigmente oder Tinten abhängig von der jeweiligen Graustufe in unterschiedlicher Schichtdicke vorzusehen. Weiter wird beschrieben, die Graustufe eines Bildelements durch den Prozentsatz der Mikrobilder zu bestimmen, bei denen dieses Designelement vorgesehen ist, und so diesen Effekt zur erzielen.

Bei der Herstellung derartiger Anordnungen ist es erforderlich, Mikrobilder mit einer sehr hohen Auflösung in eine Schicht des Mehrschichtkörpers einzubringen. Als besonders problematisch hat sich hierbei die Herstellung von Mikrobildern mit Farbabstufungen erwiesen, so dass dieses Abbildungsverfahren.zurzeit auf einfache, einfarbige Motive, wie alphanumerische Zeichen und plakative Logos beschränkt ist.

Der Erfindung liegt nun die Aufgabe zugrunde, einen verbesserten Mehrschichtkörper sowie ein Herstellungsverfahren hierzu anzugeben.

Diese Aufgabe wird durch einen Mehrschichtkörper nach Anspruch 1 und durch ein Verfahren zur Herstellung eines Mehrschichtkörpers nach Anspruch 13 gelöst. Die Erfindung ermöglicht es zum einen, eine den oben beschrieben optisch variablen Effekt zeigende Darstellung eines Bildes mit mehreren Farbwertabstufungen bereitzustellen, ohne hierzu in der zweiten Schicht eine Vielzahl hochauflösender Mehrfarbenbilder vorsehen zu müssen. Dadurch wird die Herstellung eines diesen Effekt generierenden Sicherheitselements wesentlich vereinfacht. Im weiteren wird es hierdurch ermöglicht, den oben beschriebenen optischen Effekt durch eine Anordnung einer Vielzahl unterschiedlicher Mikrobilder zu simulieren, wodurch sich weitere Vorteile ergeben. So werden zum einen störende Moire-Effekte unterdrückt, so dass die Darstellung brillanter erscheint, und zum anderen aufgrund der höheren Komplexität die Fälschungssicherheit wesentlich erhöht. Jeder Bildpunkt wird durch Überlagerung der korrespondierenden Bildpunkte mindestens zweier verschiedener Mikrobilder erzeugt. Aus den Bildpunkten der Mikrobilder wird ein vergrößerte Bildpunkt generiert, der über einen unabhängig von den anderen Bildpunkten festgesetzten Farbwert verfügt. Die Rasterweiten des ersten Mikrobildrasters und des Mikrolinsenrasters unterscheiden sich in jedem der Mikrobildbereiche um weniger als 10 % voneinander und die Rasterweite des Mikrobildbereichsrasters ist < 300 µm, so dass der Mikrobildbereichraster für das unbewaffnete menschliche Auge bei normalen Betrachtungsbedingungen nicht sichtbar ist und der oben dargestellte Effekt generiert wird.

Auf diese Weise wird ein einprägsames und überraschendes Sicherheitsmerkmal bereitgestellt, das überhaupt nicht oder nur mit hohem Aufwand nachahmbar ist.

Hierbei ist es auch möglich, dass die erste Schicht, in der eine Vielzahl von Mikrolinsen abgeformt ist, und die zweite Schicht, die die Vielzahl von Mikrobildbereichen aufweist, voneinander separierbar sind und erst zur Bereitstellung eines Sicherheitsmerkmals in Deckung gebracht werden. Die erste und die zweite Schicht können somit in separaten, voneinander getrennten Körpern angeordnet sein, beispielsweise einem ersten Körper, der ein Sicherheitsdokument bildet, und einem zweiten Körper, der als Verifikator dient. Wird der Verifikator über das Sicherheitsdokument gelegt, so wird der oben beschriebene optische Effekt generiert. Weiter können die erste Schicht und die zweite Schicht in unterschiedlichen Bereichen eines Sicherheitsdokuments vorgesehen sein und mittels Faltung des Sicherheitsdokuments in Deckung gebracht werden. Die erste Schicht mit der Vielzahl von Mikrolinsen ist so beispielsweise in einem transparenten Fenster des Sicherheitsdokuments angeordnet.

Gemäß einer bevorzugten Ausführungsform der Erfindung ist die Rasterweite der Mikrobilder und/ oder der Mikrolinsen in benachbarten Mikrobildbereichen konstant, besitzt jedoch von Mikrobildbereich zu Mikrobildbereich einen leicht unterschiedlichen Phasenversatz. Hierdurch wird die Brillanz der Darstellung weiter verbessert. Weiter ist es auch möglich, dass sämtliche Mikrobildbereich über ein einheitliches Mikrolinsenraster und Mikrobildraster verfügen, dessen Rasterweite jedoch leicht differiert, beispielsweise sich nicht mehr als 10 % voneinander unterscheidet.

Bevorzugt unterscheidet sich hierbei die Rasterweite des Mikrolinsenrasters und des Mikrobildrasters im Promillebereich. Weiter ist es auch möglich, dass das Mikrolinsenraster und das Mikrobildraster in etwa dieselbe Rasterweite besitzen und das Mikrobildraster und das Mikrolinsenraster leicht gegeneinander verdreht sind, beispielsweise 0,3 ° gegeneinander verdreht sind. Auch hier ist eine lediglich geringe, sich im Bereich bis 1 ° bewegende Verdrehung der Raster gegeneinander bevorzugt. Es ist hierdurch möglich, die Dicke des Mehrschichtkörpers aufgrund der Erhöhung des "Vergrößerungsfaktors° zu reduzieren.

Gemäß einer weiteren bevorzugten Ausführungsform der Erfindung unterscheiden sich die Rasterweiten der Mikrobilder und/ oder der Mikrolinsen in benachbarten Mikrobildbereichen. So besitzt beispielsweise das Mikrolinsenraster eine konstante Rastweite und die Rastweite des Mikrobildrasters differiert von Mikrobildbereich zu Mikrobildbereich, beträgt so beispielsweise 100 %, 100,1 %, 100,2 %, ... 100,9 % der Rasterweite des Mikrolinsenrasters. Hierdurch lassen sich interessante dynamische Farb- -Änderungseffekte sowie Tiefeneffekte erzielen.

Im weiteren ist es auch möglich, in einer ersten Gruppe von Mikrobildbereichen Mikrobilder zu verwenden, die sich von den Mikrobildern einer zweiten Gruppe von Mikrobildbereichen unterscheiden. Vorzugsweise ändern sich die in den Mikrobildbereichen verwendeten Mikrobilder hierbei beispielsweise in Abhängigkeit von dem gewählten Koordinatensystem von Mikrobildbereich zu Mikrobildbereich leicht, wodurch Verläufe erzielbar sind. Derartige Verläufe sind weiter durch die Anordnung von mehreren nebeneinander liegenden Gruppenbereichen in der zweiten Schicht möglich, wobei jeder Gruppenbereich zwei oder mehr Mikrobildbereiche umfasst und die in den jeweiligen Mikrobildbereichen verwendeten Mikrobilder sich von Gruppenbereich zu Gruppenbereich jeweils etwas unterscheiden. Die Größe eines Gruppenbereichs beträgt hierbei bevorzugt mehr als 1 mm². Weiter ist es durch derartige Konzepte möglich, eine Variation des optischen Eindrucks über die Gruppenbereiche hinweg zu erzielen, sowie Effekte wie Positiv-/Negativbilder Hell-/Dunkel-Kombinationen und dergleichen zu realisieren.

Das erfindungsgemäße Verfahren sieht vor, eine Darstellung in M Bildbereiche zu zerlegen, die Farbwerte der M Bildbereiche zu bestimmen und die Farbwerte auf einen Farbwertraum abzubilden. Dabei kann vorteilhafterweise vorgesehen sein, dass die bildliche Darstellung auf wenige prägnante Farbwerte beschränkt ist. Das erfindungsgemäße Verfahren ermöglicht jedoch auch feine Farbabstufungen, so dass ein breiter gestalterischer Spielraum vorhanden ist.

Weitere vorteilhafte Ausgestaltungen sind in den Unteransprüchen bezeichnet.

Weiter kann vorgesehen sein, dass die Mikrobilder farblose und/oder weiße und/oder transparente Bereiche sowie farbige Bereiche mit einer Farbe aufweisen. Die Begriffe "farblos", "weiß" und "transparent" sind hier gleichwertige Begriffe, die dafür stehen, dass die so bezeichneten Bereiche nicht mit der bezeichneten Farbe versehen sind.

Vorteilhafterweise kann vorgesehen sein, dass die farbigen Bereiche eine Grundfarbe aufweisen. Bei der Grundfarbe handelt es sich um eine Färbe, die zu denjenigen Farben gehört, aus denen alle anderen Farben gemischt werden können. Beispielsweise können als Grundfarben Magenta, Gelb und Cyan vorgesehen sein. Allerdings ist es auch möglich, beliebige Farben zur Mischung vorzusehen, beispielsweise aus gestalterischen oder technologischen Gründen. Es kann beispielsweise auch vorgesehen sein, dass UV-Farben und/oder IR-Farben verwendet werden, die bei Beleuchtung mit UV-Licht bzw. IR-Strahlung Licht im sichtbaren Spektralbereich aussenden.

Weiter kann vorgesehen sein, dass die farbigen Bereiche der Mikrobilder eine von G Farben mit einem Farbwert bzw. einem zugeordneten effektiven Farbwert 1/(F_{G}-1) einer F_{G} Farbwerte umfassenden linearen normierten Farbwertskala von 0 bis 1 aufweisen. Vorteilhafterweise kann vorgesehen sein, dass gleichartige Farbwertskalen verwendet werden, beispielsweise fünf Farbwerte umfassende Farbwertskalen. Bei dem Farbwert kann es sich um den Farbsättigungswert handeln, der bei Druckfarben beispielsweise durch den Anteil der Farbpigmente einstellbar ist.

Weiter kann vorgesehen sein, dass die Mikrobilder aus einem Satz von Mikrobildern ausgewählt sind. Vorzugsweise kann vorgesehen sein, daß die Mikrobilder aus einem Satz von M*G*F_{G} Mikrobildern ausgewählt sind. Dieser Satz kann jedoch jederzeit erweitert werden, indem beispielsweise die Anzahl M der Bildbereiche erhöht wird, indem einer oder mehrere Bildbereiche aufgeteilt werden. Je mehr Mikrobilder zur Verfügung stehen, desto mehr unterschiedlich ausgebildete Mikrobildbereiche können gebildet werden, wodurch beispielsweise die Nachahmung des Mehrschichtkörpers weiter erschwert und die Brillanz der Darstellung weiter erhöht werden kann.

Es kann vorgesehen sein, dass die Mikrobilder innerhalb eines jeden der Mikrobildbereiche zufällig ausgewählt und/oder zufällig angeordnet sind. Dabei kann weiter vorgesehen sein, dass bei mehr als einer Auswahlmöglichkeit der Zufall entscheidet. Durch zufällige Auswahl kann beispielsweise das Auftreten von störenden Moire Effekten vermieden werden. Weiter kann dadurch die Fälschungssicherheit erhöht werden, weil die Zufallsauswahl nicht durch determinierte mathematische Methoden ersetzbar ist.

Es kann aber auch vorgesehen sein, dass die Auswahl und/oder Verteilung der Mikrobilder einem verdeckten Prinzip folgt und auf diese Weise eine verdeckte Information in der Anordnung und/oder Verteilung der Mikrobilder codiert ist.

Weiter kann vorgesehen sein, dass die Auswahl der Mikrobilder so gewählt ist, dass bei einem Betrachter bei Überlagerung der optischen Wirkung der in einem Mikrobildbereich angeordneten Mikrobilder ein abgestufter Bildeindruck hervorgerufen wird, wobei die überlagerten Mikrobilder Farbwerte aus einem G*F_{G} Farbwerte umfassenden Farbraum aufweisen. Weil es sich bei den Mikrobildern und Mikrolinsen um Strukturen handelt, die Abmessungen unterhalb des Auflösungsvermögens des menschlichen Auges aufweisen, ist der Bildeindruck harmonisch ohne harte Farbabstufungen oder pixelige Bereiche.

Bezüglich der vorstehend beschriebenen linearen Farbwertskalen ist anzumerken, dass Abweichungen von der Linearität das Prinzip nicht in Frage stellen, Farbsättigungswerte durch Überlagerung abzustufen. Jedoch sind lineare Skalen für eine Berechnung besser geeignet als nichtlineare Skalen.

Weiter kann vorgesehen sein, dass die Bildpunkte des Mikrobildes mit unterschiedlichen optisch variablen Elementen, insbesondere unterschiedlichen Beugungsstrukturen, unterschiedlichen Dünnfilmschichtelementen oder mit unterschiedlichen Flüssigkristallschichten belegt sind. Diese optisch variablen Elemente können einem Farbwert (beispielsweise eine der Grundfarben) zugeordnet sein und - wie oben besprochen - den Bildbereich oder den Hintergrundbereich der unterschiedlichen Mikrobilder belegen. Weiter ist es auch möglich, dass unterschiedliche optisch variable Elemente jeweils einer Grundfarbe zugeordnet sind und sich so für den Betrachter eine Darstellung ergibt, die neben Farbeffekten weitere optische Effekte zeigt.

Weiter ist es auch möglich, dass Farbwerten UV-Farben oder IR-Farben zugeordnet werden. Hierdurch ist es beispielsweise möglich, Echtfarben-UV-Bilder zu realisieren, indem beispielsweise den Grundfarben entsprechende UV-Farben zugeordnet werden und in der zweiten Schicht - wie oben beschrieben - vorgesehen werden.

In einer weiteren vorteilhaften Ausbildung ist vorgesehen, dass die Bildpunkte des Mikrobildes unterschiedliche Polarisationseigenschaften aufweisen. Ein solcher Mehrschichtkörper kann verdeckte Sicherheitsmerkmale enthalten, die einem Betrachter nicht zugänglich sind und beispielsweise erst mit einer Anordnung von Polarisationsfiltern oder unter polarisiertem Licht offenbart werden.

Es kann vorgesehen sein, dass die Mikrobilder Bildpunkte aufweisen, die in einem Bildpunktraster angeordnet sind. Auf diese Weise ist es besonders einfach, eine bildliche Darstellung zu analysieren und sodann die Mikrobilder zu generieren.

Bei der Gestaltung der Mikrolinsen kann vorgesehen sein, dass die Mikrolinsen einen Durchmesser von 10 bis 150 µm aufweisen.

In einer vorteilhaften Ausführung ist vorgesehen, dass die Mikrolinsen einen Durchmesser von kleiner als 50 µm aufweisen. -

Es kann sich allerdings auch zum Mikrolinsen mit einer anderen geometrischen Form handeln, beispielsweise um Zylinderlinsen, wobei die Mikrolinsen mindestens in einer Erstreckung eine Breite von 10 bis 150 µm aufweisen können, vorzugsweise eine Breite kleiner als 50 µm.

Was die Rasterweite betrifft, kann vorgesehen sein, dass die Rasterweite der Mikrolinsen und/oder der Mikrobilder konstant ist. Es kann aber auch vorgesehen sein, dass die Rasterweite der Mikrolinsen und der Mikrobilder variabel ist.

Weiter kann vorgesehen sein, dass die Raster der Mikrolinsen und der Mikrobilder zueinander versetzt sind. Dadurch kann bei dem Betrachter der Eindruck erweckt werden, dass die beim Kippen des erfindungsgemäßen Mehrschichtkörpers sichtbare Darstellung seitlich hinter einem Fenster angeordnet ist, denn er erblickt bei schräger Blickrichtung Bereiche der Darstellung, die bei mehr lotrechter Blickrichtung nicht sichtbar sind.

Es kann vorgesehen sein, dass die erste Schicht und die zweite Schicht zusammen eine. Dicke von 10 µm bis 1.000 µm aufweisen. In einer vorteilhaften Ausgestaltung ist vorgesehen, dass die erste Schicht und die zweite Schicht zusammen eine Dicke zwischen 15 µm und 50 µm aufweisen.

Für die Verwendung des erfindungsgemäßen Mehrschichtkörpers als Sicherheitselement auf Papiersubstraten oder Foliensubstraten kann wegen der höheren Flexibilität eine geringe Dicke vorteilhaft sein. Andererseits muss die Dicke der beiden Schichten, insbesondere die Dicke der ersten Schicht, unter anderem an die Brennweite der Mikrolinsen angepasst sein. Hierbei muss u.U. ein Kompromiss geschlossen werden zwischen den Abmessungen der Mikrolinsen und der Dicke der Schichten.

Es kann vorgesehen sein, dass die Mikrolinsen als refraktive Linsen ausgebildet sind. Bei dieser Ausbildung ist vorteilhaft, dass kugelkalottenförmige Mikrolinsen beispielsweise mittels Tiefdruck erzeugt werden können, wobei sich die Form der Mikrolinsen bei geeigneter Viskosität des Materials der Mikrolinsen unter der Wirkung der Oberflächenspannung von selbst ausbildet. Es kann weiter ein UV-härtender Lack zur Ausbildung der Mikrolinsen vorgesehen sein.

Der UV-härtende Lack bildet eine Replizierlackschicht, in die mittels eines entsprechend geformten Werkzeugs eine dem Mikrolinsenraster entsprechende Oberflächenstruktur abgeformt wird und anschließen durch UV-Härtung des Lacks fixiert wird.

Weiter kann vorgesehen sein, dass die Mikrolinsen als diffraktive Linsen ausgebildet sind. In einer weiteren vorteilhaften Ausbildung ist vorgesehen, dass die Mikrolinsen mit einer Schicht bedeckt sind, wobei der Brechungszahl-Unterschied zwischen der Schicht und der Schicht, in der die Mikrolinsen abgeformt sind, größer als 0,2 ist. Die besagte Schicht kann zum einen als Schutzschicht vorgesehen sein, um die Mikrolinsen vor Verschmutzen und/oder Verkratzen zu schützen. Die Schutzschicht kann zum anderen vorgesehen sein, damit die Mikrolinsen unter keinen Umständen ertastbar sind.

Weiter kann vorgesehen sein, dass die Schicht eine Klebeschicht ist.

Es kann vorgesehen sein, dass die zweite Schicht eine metallische Schicht ist. In der metallischen Schicht kann beispielsweise das Oberflächenprofil so ausgebildet werden, dass die Reflexion oder die Transmission der metallischen Schicht entsprechend einer Grauwertskala abgestuft sind.

Weiter kann vorgesehen sein, dass die zweite Schicht eine hochbrechende dielektrische Schicht aufweist. Mit Hilfe der hochbrechenden dielektrischen Schicht kann beispielsweise in Verbindung mit einer niedrigbrechenden Schicht an der Grenzschicht zwischen beiden Schichten Totalreflexion ausgebildet werden, wodurch besonders brillante Bilder erreichbar sind. Bei der hochbrechenden dielektrischen Schicht ist auch eine hohe Langzeitstabilität zu verzeichnen, wogegen das Reflexionsvermögen metallischer Schichten durch Oxidation infolge Luftsauerstoff abnehmen kann. Die Gasdiffusion durch insbesondere dünne Kunststoffschichten ist ein bekanntes Phänomen.

Es kann auch vorgesehen sein, dass die zweite Schicht eine Farbpigmentschicht aufweist. Mit Hilfe der Farbpigmente können vorgegebene Farbwerte besonders einfach und zielgerichtet eingestellt werden.

in einer weiteren vorteilhaften Ausführung ist vorgesehen, dass die zweite Schicht ' von einem Dünnfilmschicht-System gebildet wird. Es kann auch vorgesehen sein, dass die zweite Schicht nur bereichsweise von einem Dünnfilmschichtsystem gebildet ist.

Es kann vorgesehen sein, dass die zweite Schicht eine eingefärbte Photoresistschicht aufweist. Es kann auch vorgesehen sein, dass die zweite Schicht nur bereichsweise eine Photoresistschicht aufweist.

Weiter kann vorgesehen sein, dass die zweite Schicht eine eingefärbte Lackschicht aufweist. Es kann auch vorgesehen sein, dass die zweite Schicht nur bereichsweise eine eingefärbte Lackschicht aufweist.

Im folgenden wird die Erfindung anhand von mehreren Ausführungsbeispielen unter Zuhilfenahme der beiliegenden Zeichnungen beispielhaft verdeutlicht.
Es zeigen
- Fig. 1: eine schematische Schnittdarstellung eines erfindungsgemäßen Mehrschichtkörpers;
- Fig. 2: eine schematische Draufsicht auf den Mehrschichtkörper in Fig. 1;
- Fig. 3: eine schematische Ansicht einer bildlichen Darstellung zur Erstellung eines Mikrobildes;
- Fig. 4: eine schematische Ansicht einer repetierenden Anordnung von Mikrobildern nach Fig. 2 nach dem Stand der Technik;
- Fig. 5: eine Graustufenskala der bildlichen Darstellung in Fig. 2;
- Fig. 6: eine schematische Ansicht eines ersten Ausführungsbeispiels einer repetierenden Anordnung von Mikrobildern nach Fig. 2;
- Fig. 7: eine schematische Ansicht eines zweiten Ausführungsbeispiels einer repetierenden Anordnung von Mikrobildern nach Fig. 2;
- Fig. 8: eine schematische Ansicht eines dritten Ausführungsbeispiels einer repetierenden Anordnung von Mikrobildern nach Fig. 2.

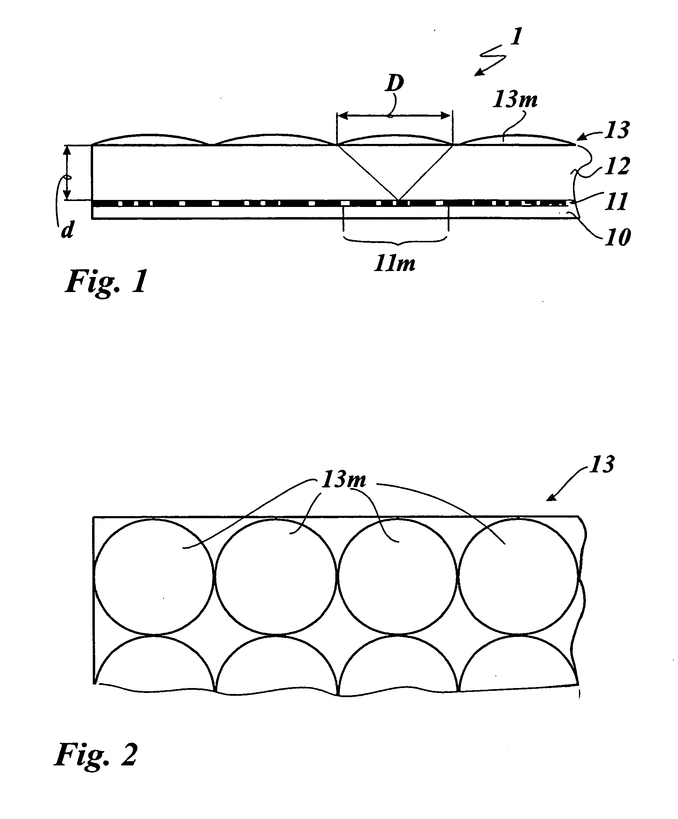

Fig. 1 zeigt einen Mehrschichtkörper 1, der eine Trägerschicht 10, eine Mikrobildschicht 11, eine Distanzschicht 12 und eine Mikrolinsenschicht 13 aufweist. Die Distanzschicht 12 weist eine Dicke d auf, welche der Brennweite einer Mikrolinse 13m der Mikrolinsenschicht 13 entspricht. Vorzugsweise sind die Mikrolinsenschicht 13 und die Distanzschicht 12 aus dem gleichen Material gebildet oder sie weisen zumindest die gleiche Brechzahl auf. Die Mikrolinsenschicht 13 kann auf die Distanzschicht 12 aufgebracht sein, beispielsweise mittels Tiefdruck. Die Mikrolinsenschicht 13 kann aber auch in die Distanzschicht 12 abgeformt sein, beispielsweise durch Heißprägen. Die Mikrolinsen 13m weisen einen Durchmesser D auf, der zwischen 10 µm und 150 µm betragen kann.

Wie in der Draufsicht in Fig. 2 zu erkennen, besteht die Mikrolinsenschicht 13 aus Mikrolinsen 13m, die in einem quadratischen Mikrolinsenraster angeordnet sind. Bei den Mikrolinsen handelt es sich in dem dargestellten Ausführungsbeispiel um sphärische refraktive Kugellinsen, die besonders einfach erstellbar sind. Es können aber auch andere refraktive Linsen vorgesehen sein oder auch diffraktive Linsen.

Die Mikrobildschicht 11 weist repetierende Mikrobilder 11 m auf, die in einem quadratischen Mikrobildraster angeordnet sind, wobei sich die Rasterweiten des Mikrobildrasters und des Mikrolinsenrasters um maximal 10 % unterscheiden. Durch die beiden unterschiedlichen Rasterweiten ist erreicht, daß die Mikrolinsen 13m jeweils einen anderen Bildpunkt der Mikrobilder 11m abbilden. Auf diese Weise wird eine vergrößerte bildpunktweise Abbildung der Mikrobilder 11 m erreicht. Der gleiche Effekt ist auch möglich, wenn die beiden Raster geringfügig gegeneinander verschwenkt werden. Es können auch andere Rasterarten vorgesehen sein, beispielsweise mit rechteckigen oder wabenförmigen Rasterelementen, oder auch an einem geometrisch transformierten Koordinatensystem (z.B. wellenförmig) orientierte Rasterelemente, sofern der Mikrobildraster und der Mikrolinsenraster nach dem gleichen Prinzip ausgebildet sind. Wegen der weiter oben beschriebenen Möglichkeiten unterschiedlicher Linsenarten und/oder Linsenformen können geeignete Linsen für die genannten anderen Rasterarten bereitgestellt werden.

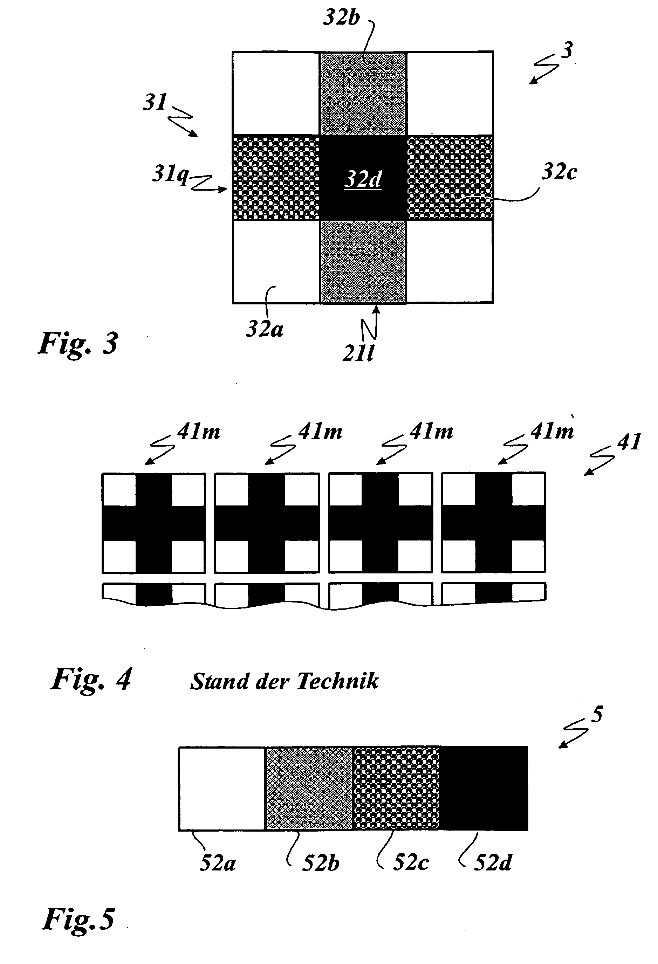

Fig. 3 zeigt nun eine bildliche Darstellung 3, bei der es sich bevorzugt um ein Logo und/oder um alphanumerische Zeichen handeln kann. Bei der bildlichen Darstellung 3 handelt es sich um ein Graustufenbild mit quadratischer Außenbegrenzung mit der Darstellung eines gleichschenkligen Kreuzes 31, das mit der Außenbegrenzung abschließt. Das Kreuz 31 ist vor einem hellen Hintergrund angeordnet, der einen ersten Grauwert 32a aufweist. Die beiden rechtwinklig gekreuzten Balken des Kreuzes 31 weisen unterschiedliche Grauwerte 32b und 32c auf, und der Überschneidungsbereich der beiden Balken weist einen vierten Grauwert 32d auf.

Fig. 4 zeigt nun eine Mikrobildschicht 41, ausgebildet mit repetierenden quadratischen Mikrobildern 41m, die nach dem Stand der Technik aus der bildlichen Darstellung 3 erzeugt sind. Die identischen Mikrobilder 41 m sind als Schwarz-Weiß-Bilder ausgeführt, d.h. sie vermögen die Grauwerte der bildlichen Darstellung 3 nicht wiederzugeben. Die Mikrobilder 41m sind in einem quadratischen Mikrobildraster angeordnet. Die Mikrobilder 41 m können mit dem in der Mikrolinsenschicht 13 abgeformten Mikrolinsenarray aus Mikrolinsen 13m (siehe Fig. 1 und 2) sichtbar gemacht werden. Beim Blick auf die Mikrolinsenschicht 13 erblickt ein Betrachter ein bildpunktweise vergrößertes Mikrobild 41 m, das dadurch gebildet ist, dass eine jede der Mikrolinsen 13m einen Bildpunkt des ihr zugeordneten Mikrobildes 41m vergrößert.

Fig. 5 zeigt nun eine Grauwertskala 5, welche die vier in der bildlichen Darstellung 3 in Fig. 3 ermittelten Grauwerte 50a bis 50d, umfasst. Die Grauwerte sind von links nach rechts mit aufsteigendem Grauwert geordnet. In einer Grauwertskala wird typischerweise der kleinste Grauwert mit "Weiß" und der größte Grauwert mit "Schwarz" bezeichnet. Wenn dem Grauwert "Weiß° die Maßzahl 0 zugemessen ist und dem Grauwert "Schwarz" die Maßzahl 1, dann umfaßt eine normierte lineare Grauwertskala die Graustufen
0 - 1/3 - 2/3 - 1.

Bei der Grauwertskala 5 handelt es sich um eine solche lineare Grauwertskala.

Weil es sich bei den Anfangs- und Endwerten der Grauwertskala um frei wählbare Grauwerte handelt, zwischen denen die weiteren Grauwerte der Grauwertskala in linearer Stufung angeordnet sind, kann auch vorgesehen sein, dass der Anfangswert mit "Schwarz" und der Endwert mit "Weiß" bezeichnet ist.
Ein solcher Positiv-Negativ-Effekt kann beispielsweise beobachtet werden, wenn die der Mikrolinsenschicht zugewandte Oberfläche der Mikrobildschicht mit einer Reflexionsschicht belegt ist, die im Durchlicht mehr oder weniger transparent erscheint oder wenn die Mikrobildschicht eine Reflexionsschicht mit dieser Eigenschaft ist.

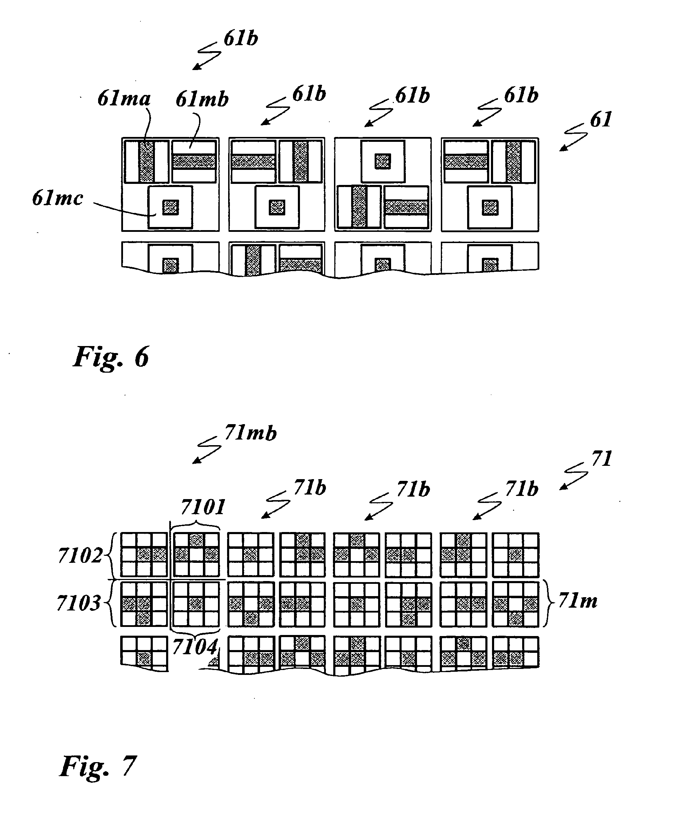

Fig. 6 zeigt nun ein erstes Ausführungsbeispiel des erfindungsgemäßen Mehrschichtkörpers, bei der eine Mikrobildschicht 61 repetierend in einem quadratischen Raster angeordnete Mikrobildbe.reiche 61 b aufweist, die Mikrobilder 61ma, 61 mb und 61mc enthalten. Jedem der Mikrobilder der Mikrobildbereictie 61b ist hierbei eine Mikrolinse der Mikrolinsenschicht zugeordnet, wobei sich die Rastweite des Mikrolinsenrasters und des Mikrobildrasters in jedem der Mikrobildbereiche um weniger als 10 % voneinander unterscheidet. Die Kantenlänge der Mikrobildbereiche 61 b ist kleiner als 300 µm vorgesehen, so dass die Mikrobildbereiche 61b durch ein unbewaffnetes menschliches Auge nicht auflösbar sind.

Auf dem Mikrobild 61 ma ist ein senkrechter Balken, auf dem Mikrobild 61 mb ist ein waagerechter Balken und auf dem Mikrobild 61 mc ist der quadratische Schnittbereich beider Balken dargestellt. In der Zusammenschau bilden die drei Mikrobilder 61 ma, 61 mb und 61 mc ein resultierendes Mikrobild, das die vier Grauwerte 50a bis 50d der Grauwertskala 5 (siehe Fig. 5) wiedergibt. Dabei sind die Mikrobilder 61 ma bis 61 mc als Schwarz-Weiß-Bilder mit den beiden Grauwerten 0 und 1/(S-1) ausgeführt, wobei S die Anzahl der Grauwert der Grauwertskala 5 bezeichnet. Die Mikrobilder 61 ma bis 61 mc weisen also die Grauwerte 0 und 1/(4-1) =1/3 auf und die Anzahl der verschiedenen Mikrobilder ist gleich der Anzahl der von null verschiedenen Grauwerte, d.h. in diesem Ausführungsbeispiel sind drei verschiedene Mikrobilder benötigt.

Die folgende Tabelle 1 veranschaulicht die Ausbildung der unterschiedlichen Grauwerte durch Überlagerung der Grauwerte der Mikrobilder 61 ma bis 61 mc.

**Tabelle 1**

| **Grauwert** | **normierter Grauwert** | **überlagerter Grauwert** |
|---|---|---|
| 50a | 0 | 0 (50a) |
| 50b | 1/3 | 1/3 (50b) |
| 50c | 2/3 | 1/3 + 1/3 (2 x 50b) |
| 50d | 1 | 1/3 + 1/3 + 1/3 (3 x 50b) |

Die Mikrobilder 61ma, 61mb und 61mc sind in dem in Fig. 6 dargestellten Ausführungsbeispiel in den Mikrobildbereichen 61b in zufälliger Weise angeordnet. Es kann aber auch vorgesehen sein, auf die zufällige Anordnung zu verzichten, die jedoch vorteilhafterweise die Fälschungssicherheit des erfindungsgemäßen Mehrschichtkörpers noch weiter erhöht und störende Moiré-Effekte vermeidet.

Die den Mikrobildern 61ma, 61mb und 61mc zugeordneten Mikrolinsen (vergleiche Fig. 1 und 2) sind analog den Mikrobildern angeordnet, d.h. sie sind in dem in Fig. 6 dargestellten Ausführungsbeispiel als Triplets angeordnet, deren Durchmesser D der Kantenlänge eines Mikrobildes entspricht.

Fig. 7 zeigt nun ein zweites Ausführungsbeispiel, bei dem eine Mikrobildschicht 71 verschiedene Mikrobildbereiche 71b aufweist, die jeweils vier Mikrobilder von unterschiedlichen Mikrobildern 7101 bis 71m aufweisen, wobei m eine Auswahl dern möglichen Mikrobilder ist (m < n). Eine solche Anordnung kann im Hinblick auf die gleichmäßige Verteilung der Mikrolinsen von Vorteil sein, weil die Mikrolinsen nun wie in dem in Fig. 4 dargestellten Ausführungsbeispiels des Standes der Technik in einem quadratischen Raster angeordnet sind und nicht nochmals wie in dem zuvor in Fig. 6 beschriebenen Ausführungsbeispiel in einem quadratischen Raster zu Triplets angeordnet sind.

Zur Berechnung der Mikrobilder 7101 bis 71m ist über die bildliche Darstellung 3 (Fig. 3) in diesem Ausführungsbeispiel ein 3 x 3 - Raster gelegt und der Grauwert eines jeden Rasterelements bestimmt. Die Mikrobilder 7101 bis 71m weisen ebenfalls einen 3 x 3 - Raster auf, wobei der Grauwert eines Rasterelements die Werte 0 oder 1/3 einnehmen kann, wie ausführlich weiter oben in Fig. 6 beschrieben. Die folgende Tabelle 2 verdeutlicht das Vorgehen.

**Tabelle 2**

| **Grauwert** | **normierter Grauwert** | **überlagerter Grauwert** |
|---|---|---|
| 50a | 0 | 4 × 0 (4 × 50a) |
| 50b | 1/3 | 3 × 0 + 1 × 1 (3 × 50a + 1 × 50b) |
| 50c | 2/3 | 2 × 0 + 2 × 1 (2 × 50a + 2 × 50b) |
| 50d | 1 | 1 × 0 + 3 × 1 (1 × 50a + 3 × 50b) |

Weil in diesem Ausführungsbeispiel mehr Mikrobilder vorgesehen sind als Grauwerte > 0 vorhanden sind, müssen die überzähligen Rasterelemente mit dem niedrigsten Grauwert ausgebildet werden.

Die in dem in Fig. 7 dargestellten Anwendungsbeispiel vorgesehene Anordnung der Mikrobilder 7102 bis 71 m ist vorteilhaft, weil dabei die Rasterelemente der Mikrobilder in einem gemeinsamen Raster angeordnet sein können, der ein Unterraster des Rasters der Mikrobildbereiche ist. Dadurch kann die Herstellung des Mehrschichtkörpers vereinfacht sein. Weiter ist es hier möglich, in benachbarten Bildbereichen nicht nur die Mikrobilder unterschiedlich anzuordnen, sondern auch jeweils einen unterschiedlichen Satz von unterschiedlichen Mikrobildern zu verwenden.

Anstelle der Graustufen können auch unterschiedliche (Grund)-Farben vorgesehen sein, die in Farbsättigungswerten abgestuft sein können. Auf diese Weise wird ein mehrdimensionaler Farbraum gebildet, der bei zwei unterschiedlichen Farben beispielsweise eine Farbfläche bildet.

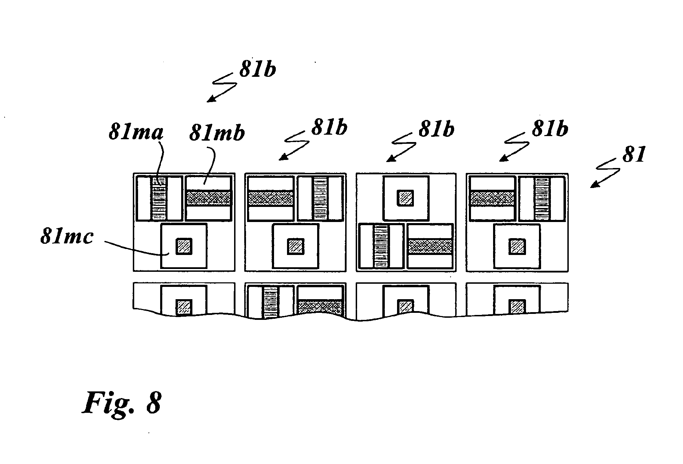

Fig. 8 zeigt nun ein drittes Ausführungsbeispiel des erfindungsgemäßen Mehrschichtkörpers; bei der eine Mikrobildschicht 81 repetierend in einem quadratischen Raster angeordnete Mikrobildbereiche 81 b aufweist, die Mikrobilder 81 ma, 81 mb und 81 mc enthalten. Die Kantenlänge der Mikrobildbereiche 81 b ist kleiner als 300 µm vorgesehen, so dass die Mikrobildbereiche 81 b durch ein unbewaffnetes menschliches Auge nicht auflösbar sind.

Auf dem Mikrobild 81ma ist ein senkrechter Balken in der Farbe Magenta, auf dem Mikrobild 81 mb ist ein waagerechter Balken in der Farbe Cyan und auf dem Mikrobild 81 mc ist der quadratische Schnittbereich beider Balken in der Farbe Gelb dargestellt. In der Zusammenschau bilden die drei Mikrobilder 61 ma, 61 mb und 61 mc ein resultierendes Mikrobild, das farblose Bereiche sowie Bereiche mit den Farben Magenta, Cyan und Schwarz aufweist. Dabei sind die Mikrobilder 81ma bis 81 mc als colorierte Schwarz-Weiß-Bilder in den Farben Magenta, Cyan und Gelb ausgeführt. Bei der den Mikrobildern 81 ma bis 81 mc zugrunde liegenden bildlichen Darstellung handelt es sich um eine farbige Darstellung mit den Konturen der Graustufendarstellung in Fig. 3. Dabei entsprechen die Grauwerte 50a bis 50d folgenden Farbwerten:
- 50a: farblos (weiß oder transparent)
- 50b: magenta
- 50c: cyan
- 50d: schwarz

Die Farben der bildlichen Darstellung können durch die drei Grundfarben Magenta, Gelb und Cyan durch Farbmischung erzeugt werden.

Die folgende Tabelle 3 veranschaulicht die Ausbildung der unterschiedlichen Farben durch Überlagerung der Farbwerte der Mikrobilder 81 ma bis 81 mc.

**Tabelle 3**

| **Grauwert** | **Farbwert** | **überlagerter Farbwert** |
|---|---|---|
| 50a | farblos, weiß | farblos, weiß (weiß) |
| 50b | magenta | magenta (magenta) |
| 50c | cyan | cyan (cyan) |
| 50d | schwarz | magenta + cyan + gelb (schwarz) |

Neben der Mischfarbe Schwarz können durch Mischung von jeweils zwei Grundfarben die weiteren Farben Rot, Grün und Blau dargestellt werden.

Die Mikrobilder 81 ma, 81 mb und 81 mc sind in dem in Fig. 8 dargestellten Ausführungsbeispiel in den Mikrobildbereichen 81 b in zufälliger Weise angeordnet. Es kann aber auch vorgesehen sein, auf die zufällige Anordnung zu verzichten, die jedoch vorteilhafterweise die Fälschungssicherheit des erfindungsgemäßen Mehrschichtkörpers noch weiter erhöht und eventuelle Moiré-Effekte vermeidet.

Weiter ist es vorgesehen, die (Grund)-Farben in ihrer Farbsättigung abzustufen, wobei in Analogie zur Grauwertskala (siehe Fig. 5) lineare Farbwertskalen vorgesehen sind, so dass ausgehend von einer von Null verschiedenen kleinsten Farbsättigung weitere Farbsättigungen durch Überlagerung der kleinsten Farbsättigung ausgebildet werden können.

## Patentansprüche

1. Mehrschichtkörper mit einer transparenten ersten Schicht, in der eine Vielzahl von Mikrolinsen abgeformt sind, und mit einer unterhalb der ersten Schicht angeordneten zweiten Schicht, die eine Vielzahl von Mikrobildern aufweist, wobei die Mikrolinsen gemäß eines Mikrolinsenrasters und die Mikrobilder gemäß eines Mikrobildrasters angeordnet sind, wobei die zweite Schicht eine Vielzahl von Mikrobildbereiche aufweist, denen jeweils zwei oder mehr der Mikrobilder zugeordnet sind und die gemäß eines Mikrobildbereichsrasters angeordnet sind, dessen Rasterweite < 300 µm ist, wobei sich innerhalb eines jeden der Mikrobildbereiche jeweils zwei oder mehr der Mikrobilder voneinander unterscheiden, die Mikrobilder erste Bereiche mit einen Farbwert Null und zweite Bereiche mit einer von G unterschiedlichen Farben und einem jeweiligen einheitlichen Farbwert > Null aufweisen, bezogen auf eine F_{G} Farbwerte umfassenden normierte Farbwertskala von 0 bis 1, sich zwei oder mehr der Mikrobilder jedes Mikrobildbereichs in ihrer Farbe unterscheiden und die Mikrobilder aus einem Satz von Mikrobildern so ausgewählt sind, dass bei Überlagerung der optischen Wirkung der in einem Mikrobildbereich angeordneten Mikrobilder ein abgestufter Bildeindruck mit Farbwerten aus einem G*F_{G} Farbwerte umfassenden Farbraum entsteht, und wobei sich die Rasterabstände des Mikrolinsenrasters und des Mikrobildrasters in jedem Mikrobildbereich um weniger als 10 % voneinander Unterscheiden

2. Mehrschichtkörper nach Anspruch 1,
**dadurch gekennzeichnet,**
**dass** in jedem der Mikrobildbereiche N unterschiedliche Mikrobilder angeordnet sind und sich die räumliche Anordnung der N unterschiedlichen Mikrobilder innerhalb des Mikrobildbereichs zweier benachbarter Mikrobildbereiche unterscheidet.

3. Mehrschichtkörper nach Anspruch 1 oder 2,
**dadurch gekennzeichnet,**
**dass** die ersten Bereiche der Mikrobilder farblose, weiße oder transparente Bereiche sind.

4. Mehrschichtkörper nach einem der vorhergehenden Ansprüche,
**dadurch gekennzeichnet,**
**dass** in jedem Mikrobildbereich mindestens G*F_{G} unterschiedliche Mikrobildern vorgesehen sind.

5. Mehrschichtkörper nach einem der vorhergehenden Ansprüche,
**dadurch gekennzeichnet ,**
**dass** in zwei benachbarten Mikrobildbereichen sich unterscheidende Sätze von unterschiedlichen Mikrobildern vorgesehen sind, wobei die unterschiedlichen Sätze so gewählt sind, dass eine additive Überlagerung der optischen Wirkung der jeweiligen Sätze das gleiche Mehrfarbenbild ergibt.

6. Mehrschichtkörper nach einem der vorhergehenden Ansprüche,
**dadurch gekennzeichnet ,**
**dass** Bereiche der Mikrobilder mit unterschiedlichen optisch variablen Elementen, insbesondere unterschiedlichen Beugungsstrukturen, unterschiedlichen Dünnfilmschichtelementen oder mit unterschiedlichen Flüssigkristallschichten belegt sind.

7. Mehrschichtkörper nach einem der vorhergehenden Ansprüche,
**dadurch gekennzeichnet,**
**dass** die Mikrobilder Bildpunkte aufweisen, die in einem Bildpunktraster angeordnet sind.

8. Mehrschichtkörper nach einem der vorhergehenden Ansprüche,
**dadurch gekennzeichnet,**
**dass** die Mikrolinsen einen Durchmesser von 10 bis 150 µm aufweisen.

9. Mehrschichtkörper nach einem der vorhergehenden Ansprüche,
**dadurch gekennzeichnet,**
**dass** der Mikrolinsenraster und der Mikrobildraster zueinander versetzt sind.

10. Mehrschichtkörper nach einem der vorhergehenden Ansprüche,
**dadurch gekennzeichnet,**
**dass** die erste Schicht und die zweite Schicht zusammen eine Dicke von 10 µm bis 1.000 µm aufweisen, insbesondere eine Dicke zwischen 15 µm und 50 µm aufweisen.

11. Mehrschichtkörper nach einem der vorhergehenden Ansprüche,
**dadurch gekennzeichnet,**
**dass** die Mikrolinsen mit einer Schicht bedeckt sind, wobei der Brechungszahl-Unterschied zwischen der Schicht und der Schicht, in der die Mikrolinsen abgeformt sind, größer als 0,2 ist.

12. Mehrschichtkörper nach einem der vorhergehenden Ansprüche,
**dadurch gekennzeichnet,**
**dass** die erste Schicht Teil eines Mikrolinsen-Analysators und die zweite Schicht Teil eines Sicherheitsdokuments ist und dass die erste und die zweite Schicht voneinander trennbar angeordnet sind.

13. Verfahren zur Herstellung eines Mehrschichtkörpers mit einem optischen Sicherheitsmerkmal, wobei das Verfahren folgende Schritte umfasst:
- Zerlegen einer Darstellung in M Bildbereiche, wobei M größer als 1 ist,
- Bestimmung-der Farbwerte der M Bildbereiche,
- Berechnung eines Satzes von >= N unterschiedlichen Mikrobildern, wobei N größer als 1 ist, jedes der Mikrobilder aus M Bildbereichen besteht und jeder der M Bildbereiche einen in Abhängigkeit vom Farbwert des jeweiligen Bildbereiches der Darstellung bestimmten Farbwert hat,
- Bereitstellen eines Mehrschichtkörpers mit einer transparenten ersten Schicht, in der eine Vielzahl von Mikrolinsen abgeformt ist, die in einem Mikrolinsenraster angeordnet sind, und
- Bereitstellen einer zweiten Schicht in dem Mehrschichtkörper, die eine Vielzahl von Mikrobildbereichen aufweist, die gemäß eines Mikrobildbereichsrasters angeordnet sind, wobei jeder der Mikrobildbereiche N Mikrobilder aufweist, die aus dem berechneten Satz von Mikrobildern so ausgewählt sind, dass die Mikrobilder erste Bereiche mit einen Farbwert Null und zweite Bereiche mit einer von G unterschiedlichen Farben und einem jeweiligen einheitlichen Farbwert > Null aufweisen, bezogen auf eine F_{G} Farbwerte umfassenden normierte Farbwertskala von 0 bis 1, sich zwei oder mehr der Mikrobilder jedes Mikrobildbereichs in ihrer Farbe unterscheiden und bei Überlagerung der optischen Wirkung der in einem Mikrobildbereich angeordneten Mikrobilder ein abgestufter Bildeindruck mit Farbwerten aus einem G*F_{G} Farbwerte umfassenden Farbraum entsteht, sich die Rasterabstände des Mikrolinsenrasters und des Mikrobildrasters in jedem der Mikrobildbereiche um weniger als 10% voneinander unterscheiden, der Mikrobildbereichsraster eine Rasterweite von weniger als 300 µm besitzt und sich innerhalb eines jeden Mikrobildbereiches jeweils zwei oder mehr der Mikrobilder voneinander unterscheiden.

14. Verfahren nach Anspruch 13,
**dadurch gekennzeichnet,**
**dass** die Farbwerte auf einen Farbwertraum abgebildet werden, der von G Grundfarben aufgespannt ist, die einen Farbsättigungswert aus einer F_{G} Farbwerte umfassenden Farbsättigungsskala aufweisen, und ein Satz von mindestens F_{G}*G unterschiedlichen Mikrobildern berechnet wird, wobei jedes der Mikrobilder aus M Bildbereichen besteht und jeder der M Bildbereiche entweder den Farbsättigungswert Null oder den Farbsättigungswert 1 gemäß einer normierten Farbwertskala von 0 bis 1 besitzt.

15. Verfahren nach Anspruch 13 oder 14,
**dadurch gekennzeichnet,**
**dass** ein Satz von S unterschiedlichen Mikrobildern berechnet wird, der mehr als N unterschiedliche Mikrobilder enthält und dass für mindestens zwei Mikrobildbereiche aus dem Satz von S unterschiedlichen Mikrobildern sich unterscheidende Sätze von N Mikrobildern ausgewählt werden und in den Mikrobildbereichen vorgesehen werden.

## Claims

1. Multilayer body having a transparent first layer, in which layer a large number of microlenses are formed, and having a second layer, which is arranged underneath the first layer and has a large number of microimages, wherein the microlenses are arranged according to a microlens grid and the microimages are arranged according to a microimage grid, wherein the second layer has a large number of microimage regions which are each assigned two or more of the microimages and which are arranged according to a microimage region grid, the grid width of which is < 300 µm, wherein in each case two or more of the microimages within each of the microimage regions differ from one another, the microimages have first regions with a colour value zero and second regions with colours other than G and a respective uniform colour value > zero, based on a standardized colour scale from 0 to 1, which comprises F_{G} colour values, two or more of the microimages in each microimage region differ in terms of their colour and the microimages are selected from a set of microimages such that, upon superposition of the optical effect of the microimages arranged in a microimage region, a graduated image impression with colour values from a colour space which comprises G*F_{G} colour values is produced, and wherein the grid spacings of the microlens grid and of the microimage grid in each microimage region differ from one another by less than 10%.

2. Multilayer body according to Claim 1, **characterized in that** N different microimages are arranged in each of the microimage regions and the spatial arrangement of the N different microimages within the microimage region of two adjacent microimage regions differs.

3. Multilayer body according to Claim 1 or 2, **characterized in that** the first regions of the microimages are colourless, white or transparent regions.

4. Multilayer body according to one of the preceding claims, **characterized in that** at least G*F_{G} different microimages are provided in each microimage region.

5. Multilayer body according to one of the preceding claims, **characterized in that** different sets of different microimages are provided in two adjacent microimage regions, wherein the different sets are selected such that an additive superposition of the optical effect of the respective sets gives the same multicolour image.

6. Multilayer body according to one of the preceding claims, **characterized in that** regions of the microimages are overlaid by different optically variable elements, in particular different diffraction structures, different thin-film layer elements or by different liquid-crystal layers.

7. Multilayer body according to one of the preceding claims, **characterized in that** the microimages have pixels which are arranged in a pixel grid.

8. Multilayer body according to one of the preceding claims, **characterized in that** the microlenses have a diameter of 10 to 150 µm.

9. Multilayer body according to one of the preceding claims, **characterized in that** the microlens grid and the microimage grid are offset relative to each other.

10. Multilayer body according to one of the preceding claims, **characterized in that** the first layer and the second layer together have a thickness of 10 µm to 1000 µm, in particular a thickness of between 15 µm and 50 µm.

11. Multilayer body according to one of the preceding claims, **characterized in that** the microlenses are overlaid by a layer, wherein the difference in refractive index between this layer and that layer in which the microlenses are formed is more than 0.2.

12. Multilayer body according to one of the preceding claims, **characterized in that** the first layer is part of a microlens analyser and the second layer is part of a security document and **in that** the first and second layers are arranged such that they can be separated from each other.

13. Method for producing a multilayer body having an optical security feature, the method comprising the following steps:
- decomposing a representation into M image regions, wherein M is greater than 1,
- determining the colour values of the M image regions,
- calculating a set of >= N different microimages, wherein N is greater than 1, each of the microimages consists of M image regions and each of the M image regions has a colour value which is determined as a function of the colour value of the respective image region of the representation,
- providing a multilayer body having a transparent first layer, in which a large number of microlenses are formed which are arranged in a microlens grid, and
- providing a second layer in the multilayer body, which layer has a large number of microimage regions which are arranged according to a microimage region grid, wherein each of the microimage regions has N microimages which are selected from the calculated set of microimages such that the microimages have first regions with a colour value zero and second regions with colours other than G and a respective uniform colour value > zero, based on a standardized colour scale from 0 to 1, which comprises F_{G} colour values, two or more of the microimages in each microimage region differ in terms of their colour and, upon superposition of the optical effect of the microimages arranged in a microimage region, a graduated image impression with colour values from a colour space which comprises G*F_{G} colour values is produced, the grid spacings of the microlens grid and of the microimage grid in each of the microimage regions differ from one another by less than 10%, the microimage region grid has a grid width of less than 300 µm and in each case two or more of the microimages within each microimage region differ from one another.

14. Method according to Claim 13, **characterized in that** the colour values are imaged onto a colour value space, which is spanned by G primary colours which have a colour saturation value from a colour saturation scale which comprises F_{G} colour values, and a set of at least F_{G}*G different microimages is calculated, wherein each of the microimages consists of M image regions and each of the M image regions has either the colour saturation value zero or the colour saturation value 1 according to a standardized colour value scale from 0 to 1.

15. Method according to Claim 13 or 14, **characterized in that** a set of S different microimages is calculated, which set contains more than N different microimages, and **in that**, for at least two microimage regions from the set of S different microimages, differing sets of N microimages are selected and are provided in the microimage regions.

## Revendications

1. Corps multicouche avec une première couche transparente, dans laquelle une pluralité de micro-lentilles est moulée, et avec une seconde couche disposée au-dessous de la première couche, qui présente une pluralité de micro-images, les micro-lentilles étant disposées selon une trame de micro-lentilles et les micro-images selon une trame de micro-images, la seconde couche présentant une pluralité de zones de micro-images, auxquelles sont associées respectivement deux micro-images ou plus et qui sont disposées selon une trame de zone de micro-images, dont la largeur de trame est < à 300 µm, respectivement deux micro-images ou plus se distinguant l'une de l'autre dans chacune des zones de micro-images, les micro-images présentant des premières zones avec une valeur chromatique de zéro et des secondes zones avec une couleur différente de G et une valeur chromatique uniforme respective > à zéro, par rapport à une échelle de valeur chromatique normalisée comportant des F_{G} valeurs chromatiques de 0 à 1, deux micro-images ou plus de chaque zone de micro-images se distinguant dans leur couleur et les micro-images étant sélectionnées parmi un jeu de micro-images de sorte que lors de la superposition de l'effet optique des micro-images disposées dans une zone de micro-images, un aspect d'image nuancé avec des valeurs chromatiques provienne d'un espace de couleur comportant G*F_{G} valeurs chromatiques et les distances de trame entre la trame de micro-lentilles et la trame de micro-images se distinguant dans chaque zone de micro-images de moins de 10 % l'une de l'autre.

2. Corps multicouche selon la revendication 1, **caractérisé en ce que** dans chacune des zones de micro-images sont disposées N micro-images différentes et **en ce que** la disposition spatiale des N micro-images différentes se distingue dans la zone de micro-images de deux zones de micro-images contiguës.

3. Corps multicouche selon la revendication 1 ou 2, **caractérisé en ce que** les premières zones des micro-images sont des zones incolores, blanches ou transparentes.

4. Corps multicouche selon l'une quelconque des revendications précédentes, **caractérisé en ce que** dans chaque zone de micro-images sont prévues au moins G*F_{G} micro-images différentes.

5. Corps multicouche selon l'une quelconque des revendications précédentes, **caractérisé en ce que** dans deux zones de micro-images contiguës sont prévus différents jeux de micro-images différentes, les différents jeux étant choisis de sorte qu'une superposition supplémentaire de l'effet optique des jeux respectifs produise la même image polychrome.

6. Corps multicouche selon l'une quelconque des revendications précédentes, **caractérisé en ce que** des zones des micro-images sont garnies de différents éléments variables optiquement, en particulier de différentes structures de diffraction, de différents éléments de couche de film mince ou de différentes couches à cristaux liquides.

7. Corps multicouche selon l'une quelconque des revendications précédentes, **caractérisé en ce que** les micro-images présentent des points d'image qui sont disposés dans une trame de points d'image.

8. Corps multicouche selon l'une quelconque des revendications précédentes, **caractérisé en ce que** les micro-lentilles présentent un diamètre compris entre 10 et 150 µm.

9. Corps multicouche selon l'une quelconque des revendications précédentes, **caractérisé en ce que** la trame de micro-lentilles et la trame de micro-images sont décalées l'une par rapport à l'autre.

10. Corps multicouche selon l'une quelconque des revendications précédentes, **caractérisé en ce que** la première couche et la seconde couche présentent ensemble une épaisseur comprise entre 10 et 1 000 µm, en particulier une épaisseur comprise entre 15 et 50 µm.

11. Corps multicouche selon l'une quelconque des revendications précédentes, **caractérisé en ce que** les micro-lentilles sont couvertes d'une couche, la différence d'indice de réfraction entre la couche et la couche, dans laquelle les micro-lentilles sont moulées étant supérieure à 0,2.

12. Corps multicouche selon l'une quelconque des revendications précédentes, **caractérisé en ce que** la première couche fait partie d'un analyseur de micro-lentilles et la seconde couche fait partie d'un document de sécurité et **en ce que** la première et la seconde couches sont disposées de manière à pouvoir être séparées l'une de l'autre.

13. Procédé de fabrication d'un corps multicouche avec une caractéristique de sécurité optique, le procédé comportant les étapes suivantes consistant à :
- fractionner une représentation en M zones d'image, M étant plus grand que 1,
- déterminer les valeurs chromatiques des M zones d'image,
- calculer un jeu de > = N micro-images différentes, N étant plus grand que 1, chacune des micro-images se composant de M zones d'image et chacune des M zones d'image ayant une valeur chromatique déterminée en fonction de la valeur chromatique de la zone d'image respective de la représentation,
- mettre à disposition un corps multicouche avec une première couche transparente, dans laquelle une pluralité de micro-lentilles est moulée, lesquelles sont disposées dans une trame de micro-lentilles, et
- mettre à disposition une seconde couche dans le corps multicouche, qui présente une pluralité de zones de micro-images qui sont disposées selon une trame de micro-images, chacune des zones de micro-images présentant N micro-images qui sont sélectionnées dans le jeu calculé de micro-images de sorte que les micro-images présentent des premières zones avec une valeur chromatique de zéro et des secondes zones avec une couleur différente de G et une valeur chromatique uniforme respective > à zéro, par rapport à une échelle de valeur chromatique normalisée comportant F_{G} valeurs chromatiques de 0 à 1, deux micro-images ou plus de chaque zone de micro-images se distinguent dans leur couleur et lors de la superposition de l'effet optique des micro-images disposées dans une zone de micro-images, un aspect d'image nuancé avec des valeurs chromatiques provienne d'un espace de couleur comportant G*F_{G} valeurs chromatiques, les distances de trame entre la trame de micro-lentilles et la trame de micro-images se distinguent dans chacune des zones de micro-images de moins de 10 % l'une de l'autre, la trame de zone de micro-images possède une largeur de trame inférieure à 300 µm et respectivement deux micro-images ou plus se distinguent l'une de l'autre dans chaque zone de micro-images.

14. Procédé selon la revendication 13, **caractérisé en ce que** les valeurs chromatiques sont représentées sur un espace de valeur chromatique qui est étiré par G couleurs primaires qui présentent une valeur de saturation de couleur d'une échelle de saturation de couleur comportant F_{G} valeurs chromatiques, et un jeu d'au moins F_{G}*G micro-images différentes étant calculé, chacune des micro-images se composant de M zones d'image et chacune des M zones d'image possédant la valeur de saturation de couleur de zéro ou la valeur de saturation de couleur 1 selon une échelle de valeur chromatique normalisée de 0 à 1.

15. Procédé selon la revendication 13 ou 14, **caractérisé en ce qu'**un jeu de S micro-images différentes est calculé, lequel contient plus de N micro-images différentes et **en ce que** pour au moins deux zones de micro-images, des jeux différents de N micro-images sont sélectionnés dans le jeu de S micro-images différentes, et sont prévus dans les zones de micro-images.
